# EUROPEAN PATENT APPLICATION

(11) **EP 4 622 275 A1**
(43) Date of publication of application: **24.09.2025**
(21) Application number: 23890618.4
(22) Date of filing: 02.11.2023
(51) Int. Cl.: H04N 21/431

(54) **VIDEO-BASED INTERACTION METHOD, APPARATUS, AND DEVICE, AND STORAGE MEDIUM**

(30) Priority: 16.11.2022 CN 202211436020
(71) Applicant: Beijing Zitiao Network Technology Co., Ltd., Beijing 100190 (CN)
(72) Inventor: CHE, Wanli, Beijing 100028 (CN); FEI, Xiaoling, Beijing 100028 (CN)
(74) Representative: Isarpatent
(86) International application number: PCT/CN2023/129228
(87) International publication number: WO 2024/104182

(57) **Abstract**

The present disclosure provides a method, an apparatus, a device and a storage medium for video-based interaction. The method comprises: displaying a plurality of user identifiers on a video play page of a target video, wherein the target video has a plurality of associated users, and the user identifiers are used to identify the associated users; in response to a trigger operation on a target user identifier of the plurality of user identifiers, displaying a preset panel on the video play page, and displaying preset media content information of a target associated user corresponding to the target user identifier in a first display area on the preset panel. It can be seen that the disclosed embodiment can display preset media content information of the associated users of the target video on the video play page of the target video, so that the viewing user can quickly understand the associated users of the target video, thereby enriching the video-based interactive function and improving the user experience.

## Description

### CROSS-REFERENCE TO RELATED APPLICATION(S)

This application claims priority to Chinese Application No. 202211436020.4 filed on Nov. 16, 2022, the disclosure of which is incorporated herein by reference in its entirety.

### FIELD

The present disclosure relates to the field of data processing, and in particular to a method, an apparatus, a device and a storage medium for video-based interaction.

### BACKGROUND

With a continuous development of video processing technology, people's demands for interactive functions during video playing process are becoming more and more diverse.

Therefore, how to enrich the interactive functions during video playing process to improve the user experience is a technical problem that needs to be solved.

### SUMMARY

In order to solve the above technical problem, the embodiments of the present disclosure provide a method for video-based interaction.

In a first aspect, the present disclosure provides a method for video-based interaction. The method comprises:
displaying a plurality of user identifiers on a video play page of a target video, wherein the target video has a plurality of associated users, and the user identifiers are used to identify the associated users;
in response to a trigger operation on a target user identifier of the plurality of user identifiers, displaying a preset panel on the video play page, and displaying preset media content information of a target associated user corresponding to the target user identifier in a first display area on the preset panel.

In an optional implementation, the preset media content information comprises covers of a preset number of multimedia works published by the target associated user. The method further comprises:
in response to a trigger operation on a cover of a target multimedia work in the first display area, playing the target multimedia work based on a target multimedia information stream, wherein the target multimedia information stream comprises multimedia works published by the target associated user.

In an optional implementation, the method further comprises:
displaying a list of associated users corresponding to the target video in a second display area on the preset panel, wherein the list of associated users comprises other associated users among the associated users corresponding to the target video except the target associated user.

In an optional implementation, the associated users in the list of associated users are respectively provided with preset first interactive controls, and the method further comprises:
in response to a trigger operation on a preset first interactive control corresponding to a first associated user in the list of associated users, establishing a preset first interactive relationship between a current user and the first associated user.

In an optional implementation, the method further comprises:
in response to a trigger operation on a preset sub-area in the first display area, jumping from the video play page to a profile page of the target associated user.

In an optional implementation, a preset second interactive control is provided in the first display area, and the method further comprises:
in response to a trigger operation on the preset second interactive control in the first display area, establishing a preset second interactive relationship between a current user and the target associated user.

In an optional implementation, the user identifier comprises a user name and/or a user avatar icon.

In a second aspect, the present disclosure provides an apparatus for video-based interaction. The apparatus comprises:
a display module, used to display a plurality of user identifiers on a video play page of a target video, wherein the target video has a plurality of associated users, and the user identifiers are used to identify the associated users; and
a first display module, used to display, in response to a trigger operation on a target user identifier of the plurality of user identifiers, a preset panel on the video play page, and preset media content information of a target associated user corresponding to the target user identifier in a first display area on the preset panel.

In a third aspect, the present disclosure provides a computer-readable storage medium, that stores instructions, wherein the instructions, when executed on a terminal device, cause the terminal device to implement the above method.

In a fourth aspect, the present disclosure provides a device for video-based interaction. The device comprises: a memory, a processor, and a computer program stored in the memory and executable on the processor, wherein the processor, when executing the computer program, implements the above method.

In a fifth aspect, the present disclosure provides a computer program product comprising computer programs/instructions, wherein the computer program/instructions, when executed by a processor, implement the above method.

Compared with the prior art, the technical solution provided by the embodiments of the present disclosure has at least the following advantages.

The disclosed embodiment provides a method for video-based interaction, wherein a plurality of user identifiers are displayed on a video play page of the target video, wherein the target video has a plurality of associated users, and the user identifiers are used to identify the associated users. In response to a trigger operation on a target user identifier of the plurality of user identifiers, the preset panel is displayed on the video play page, and the preset media content information of the target associated user corresponding to the target user identifier is displayed in the first display area on the preset panel. It can be seen that the disclosed embodiment can display preset media content information of the associated users of the target video on the video play page of the target video, so that the viewing user can quickly understand the associated users of the target video, thereby enriching the video-based interactive function and improving the user experience.

### BRIEF DESCRIPTION OF THE DRAWINGS

The accompanying drawings, which are incorporated in and constitute a part of the specification, illustrate the embodiments consistent with the present disclosure and, together with the specification, serve to explain the principles of the present disclosure.

In order to illustrate the technical solutions in the embodiments of the present disclosure or the prior art more clearly, the drawings needed to be used in the description of the embodiments or the prior art will be briefly introduced below. Obviously, for those of ordinary skill in the art, other drawings may also be obtained based on these drawings without exercising inventive labor.
FIG. 1 is a flow chart of a method for video-based interaction provided by an embodiment of the present disclosure;
FIG. 2 is a schematic diagram of a video play page provided by an embodiment of the present disclosure;
FIG. 3 is a schematic diagram of another video play page provided by an embodiment of the present disclosure;
FIG. 4 is a schematic diagram of the structure of an apparatus for video-based interaction provided by an embodiment of the present disclosure;
FIG. 5 is a schematic diagram of the structure of a device for video-based interaction provided by an embodiment of the present disclosure.

### DETAILED DESCRIPTION OF EMBODIMENTS

In order to more clearly understand the above-mentioned objectives, features and advantages of the present disclosure, the solution of the present disclosure will be further described below. It should be noted that the embodiments of the present disclosure and the features in the embodiments can be combined with each other if not conflicted.

In the following description, many specific details are set forth to facilitate a full understanding of the present disclosure, but the present disclosure may also be implemented in other ways different from those described herein. It is obvious that the embodiments in the specification are only part of the embodiments of the present disclosure, rather than all of the embodiments.

With the continuous development of video processing technology, people's demands for interactive functions during video playing process are becoming more and more diverse.

Therefore, how to enrich the interactive functions during video playing process to improve the user experience is a technical problem that needs to be solved.

Thus, the disclosed embodiment provides a method for video-based interaction, wherein a plurality of user identifiers are displayed on a video play page of the target video. The target video has a plurality of associated users, and the user identifiers are used to identify the associated users. In response to a trigger operation on a target user identifier of the plurality of user identifiers, the preset panel is displayed on the video play page, and the preset media content information of the target associated user corresponding to the target user identifier is displayed in the first display area on the preset panel. It can be seen that the disclosed embodiment can display preset media content information of the associated users of the target video on the video play page of the target video, so that the viewing user can quickly understand the associated users of the target video, thereby enriching the video-based interactive function and improving the user experience.

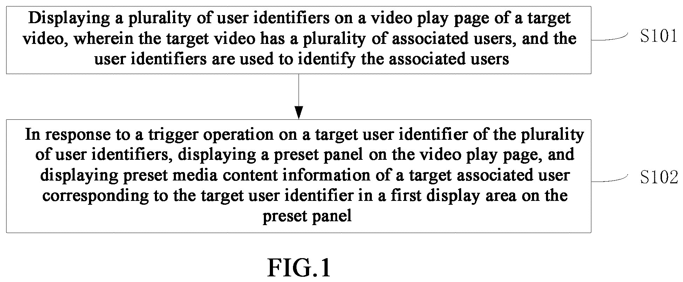

Based on this, the embodiment of the present disclosure provides a method for video-based interaction, which is applied to a client. Referring to FIG. 1, a flow chart of a method for video-based interaction provided by the embodiment of the present disclosure is shown. The method comprises:

S101: displaying a plurality of user identifiers on a video play page of a target video. Wherein the target video has a plurality of associated users, and the user identifiers are used to identify the associated users.

The method for video processing provided by the embodiments of the present disclosure may be applied to a client. For example, the client may comprise a client deployed on a smart phone, and a client deployed on a tablet computer, etc.

In the embodiment of the present disclosure, the target video may be any video with a plurality of associated users, wherein the associated user may be user who participated in the creation of the target video, such as the creator and publisher of the target video. Specifically, the target video may be a video collaboratively created by a plurality of users. For example, the plurality of associated users corresponding to the target video may comprise users who participated in the creation of the target video, such as the shooting user, the editing user, and the dubbing user.

In the embodiment of the present disclosure, the user identifier is used to identify the associated user. Specifically, each associated user of the target video corresponds to a user identifier, and the user identifier is used to identify the corresponding associated user. Specifically, the user identifier may comprise a user name and/or a user avatar icon, that is, the user identifier may comprise at least one of the user name and the user avatar icon.

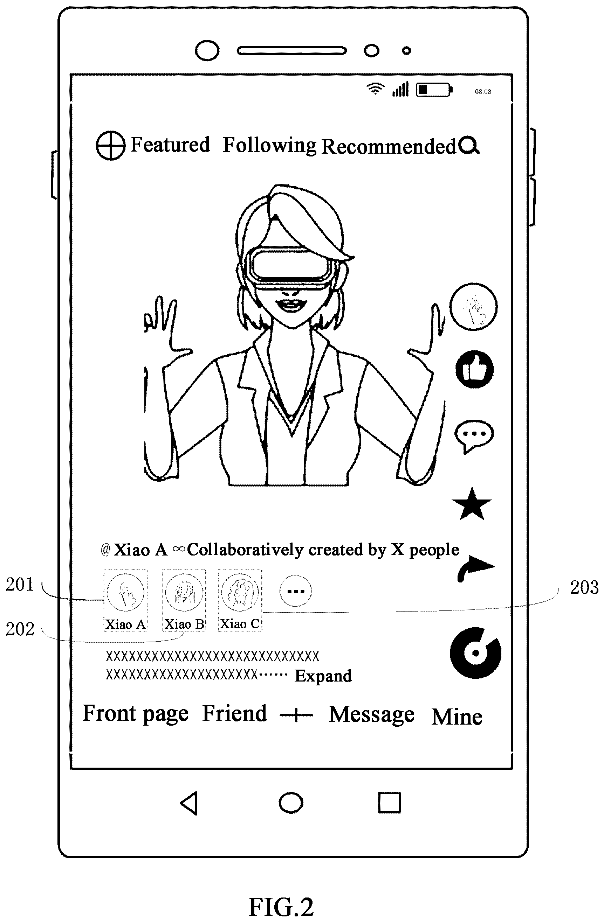

FIG. 2 is a schematic diagram of a video play page of the target video provided by the embodiment of the present disclosure. Wherein the target video is collaboratively created by users Xiao A, Xiao B and Xiao C, and users Xiao A, Xiao B and Xiao C are the associated users corresponding to the target video. Therefore, on the video play page of the target video, the user identifier 201 corresponding to user Xiao A, the user identifier 202 corresponding to user Xiao B, and the user identifier 203 corresponding to user Xiao C can be displayed respectively. Wherein the user identifier 201 corresponding to user Xiao A comprises the user name "Xiao A" and the user avatar icon of the user Xiao A.

In an optional implementation, the display order of the plurality of user identifier displayed on the video play page can be determined based on actual needs. For example, they can be ordered based on the first letter of the user name. The display order of each user identifier can also be determined by the publisher of the target video. The embodiments of the present disclosure do not limit this.

S102: in response to a trigger operation on a target user identifier of the plurality of user identifiers, displaying a preset panel on the video play page, and displaying preset media content information of a target associated user corresponding to the target user identifier in a first display area on the preset panel.

In the embodiment of the present disclosure, the target user identifier can be any one of the plurality of user identifiers displayed on the video play page. Specifically, when a trigger operation on any user identifier is received, the user identifier is determined as the target user identifier, and the preset panel is displayed on the video play page of the target video.

In the embodiment of the present disclosure, the trigger operation on the target user identifier may comprise a click operation and a touch-and-hold operation on the target user identifier, etc., to realize the function of expanding the preset panel on the video play page of the target video. Wherein displaying the panel on the video play page will not affect the play of the target video, that is, in the process of displaying the panel, the state of playing the target video can be maintained on the video play page. Therefore, the method provided by the embodiment of the present disclosure can reduce the impact on the play function of the target video in the process of displaying the preset media content information, thereby ensuring the user's video viewing experience.

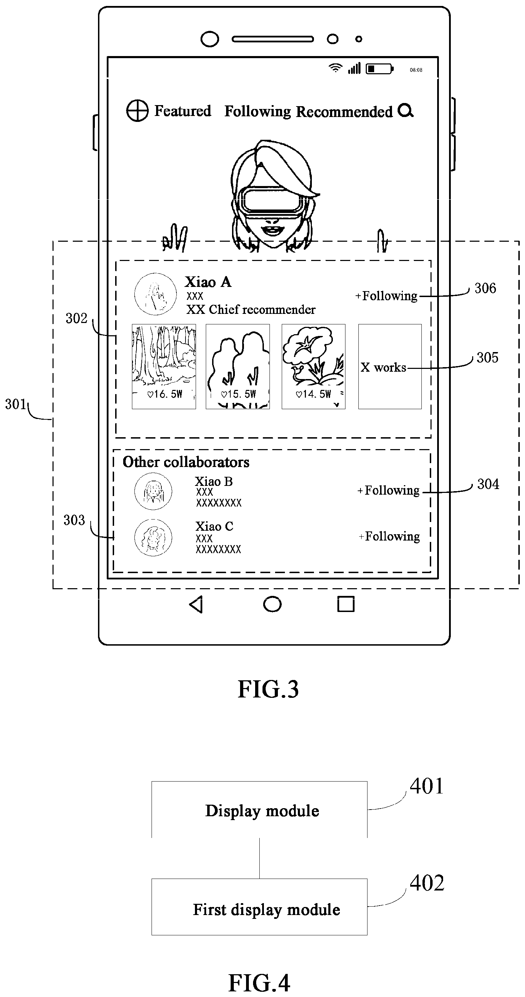

As shown in FIG. 2, when a trigger operation for a user identifier 201 on a video play page is received, the user identifier 201 is regarded as a target user identifier, and a preset panel is displayed on the video play page shown in FIG. 3. FIG. 3 is a schematic diagram of another video play page provided by the embodiment of the present disclosure, wherein a preset panel 301 is displayed on the video play page. It should be noted that the preset panel in the embodiment of the present disclosure can be arranged at any position on the video play page, such as the bottom position, top position, etc. of the video play page. The display style and display size of the preset panel can be determined based on actual needs and are not limited to this.

In the embodiment of the present disclosure, when the preset panel is displayed on the video play page, the preset media content information of the target associated user corresponding to the target user identifier can be displayed in the first display area of the preset panel, so that the current user can understand the target associated user based on the displayed preset media content information, and select the media content of interest to view based on the preset media content information. The display position and display size of the first display area can be determined based on actual needs, and the embodiment of the present disclosure does not limit this.

In the embodiment of the present disclosure, the preset media content information may comprise covers of a preset number of multimedia works published by the target associated user. Wherein the multimedia works may comprise video, article, and other types of works. Accordingly, assuming that the multimedia work is a video work, the cover of the multimedia work may be one frame of the video work or a plurality of consecutive frames of the video work. And assuming that the multimedia work is an article work, the cover of the multimedia work may be a picture carried in the article work, etc.

In an optional implementation, the preset media content information displayed in the first display area of the preset panel may comprise information of a preset number of multimedia works determined based on the popularity of the multimedia works published by the target associated user, such as the cover, number of likes, etc. of the multimedia works with a large number of playing times may be displayed as the preset media content information in the first display area of the preset panel for the current user to view.

In an optional implementation, when the preset media content information is displayed in the first display area of the preset panel, the number of covers of the multimedia work can be determined based on the display size of the first display area and the display size of the cover of the multimedia work.

As shown in FIG. 2, when a trigger operation is received for the target user identifier 201, the preset panel 301 is displayed on the video play page shown in FIG. 3, and the preset media content information of the target associated user (Xiao A) corresponding to the target user identifier 201 is displayed in the first display area 302 of the preset panel 301. The preset media content information specifically comprises information about the covers and the number of likes corresponding to three multimedia works published by the target associated user (Xiao A), as well as the personal signature information of the target associated user (Xiao A), such as "XX Chief recommender".

In actual applications, in order to facilitate the current user to view the multimedia works published by the target associated user, the play of the target multimedia work based on the target multimedia information stream can be triggered by a trigger operation on the cover of the target multimedia work in the first display area. Wherein the target multimedia information stream comprises multimedia works published by the target associated user.

In the embodiment of the present disclosure, the trigger operation on the cover of the target multimedia work may comprise a click operation, a touch-and-hold operation, etc. on the cover of the target multimedia work. Wherein the target multimedia work may be any multimedia work displayed in the first display area.

In an optional implementation, when playing the target multimedia work, other multimedia works published by the target associated user can also be played based on the target multimedia information stream by upward sliding operation or downward sliding operation on the video play page of the target multimedia work. Specifically, when receiving the upward sliding operation on the video play page of the target multimedia work, the next multimedia work adjacent to the target multimedia work in the target multimedia information stream is played. When receiving a downward sliding operation on the video play page of the target multimedia work, the previous multimedia work adjacent to the target multimedia work in the target multimedia information stream is played.

The disclosed embodiment provides a method for video-based interaction, wherein a plurality of user identifiers are displayed on a video play page of the target video. Wherein the target video has a plurality of associated users, and the user identifiers are used to identify the associated users. In response to a trigger operation on a target user identifier of the plurality of user identifiers, the preset panel is displayed on the video play page, and the preset media content information of the target associated user corresponding to the target user identifier is displayed in the first display area on the preset panel. It can be seen that the disclosed embodiment can display preset media content information of the associated users of the target video on the video play page of the target video, so that the viewing user can quickly understand the associated users of the target video, thereby enriching the video-based interactive function and improving the user experience.

Based on the content of the above embodiments, in order to facilitate users to understand the relevant information of other associated users of the target video, the list of associated users corresponding to the target video can also be displayed in the second display area on the preset panel, thereby further enriching the video-based interactive functions and improving the user experience.

In the embodiment of the present disclosure, the list of associated users comprises other associated users among the associated users corresponding to the target video except the target associated user. For example, assuming that the target video is collaboratively created by users Xiao A, Xiao B, and Xiao C, when a trigger operation is received for the user identifier of the user Xiao A, the user Xiao A is determined as the target associated user, and the preset media content information of Xiao A is displayed in the first display area on the preset panel. At the same time, the list of associated users consisting of Xiao B and Xiao C is displayed in the second display area on the preset panel.

In an optional implementation, in order to better display the list of associated users, in actual application, the second display area can be arranged at a preset position below the first display area. As shown in FIG. 3, the preset media content information of the target associated user Xiao A is displayed in the first display area 302, and the list of associated users corresponding to the target video is displayed in the second display area 303. Specifically, the list of associated users displays the associated users Xiao B and Xiao C. On the preset panel, the current user can select an associated user of interest to view information and perform other operations based on the list of associated users displayed in the second display area.

In another optional implementation, when the list of associated users corresponding to the target video is displayed on the preset panel, in order to facilitate the current user to view all users in the list of associated users, upon receiving an upward sliding operation on the preset panel, the embodiment of the present disclosure can enlarge the preset panel to a larger display area, for example, switching from a 60%-panel (occupying 60% of the display area on the video play page) to a 90%-panel (occupying 90% of the display area on the video play page), thereby improving the user experience.

In actual applications, in order to further enrich the video-based interactive functions, a corresponding preset first interactive control can be set for each associated user in the list of associated users. Wherein the preset first interactive control can be a control for triggering any type of interactive operation. For example, the preset first interactive control can comprise a following control, a like control, a co-shoot control, and the like.

In the embodiment of the present disclosure, the associated users in the list of associated users are respectively provided with preset first interactive controls, and in response to a trigger operation on the preset first interactive control corresponding to a first associated user in the list of associated users, a preset first interactive relationship between the current user and the first associated user is established.

In the embodiment of the present disclosure, the trigger operation on the preset first interactive control corresponding to a first associated user in the list of associated users may comprise a click operation and a touch-and-hold operation, etc. on the preset first interactive control, which is not limited in the embodiment of the present disclosure. The first associated user may be any associated user in the list of associated users.

In the embodiment of the present disclosure, the preset first interactive relationship between the current user and the first associated user can be determined based on the preset first interactive control. Specifically, there is a corresponding relationship between the preset first interactive relationship and the preset first interactive control. For example, as shown in FIG. 3, assuming that the preset first interactive control is a following control, when a trigger operation on the preset first interactive control 304 corresponding to the first associated user (Xiao B) in the list of associated users is received, the first associated user (Xiao B) is determined as the following object of the current user, thereby realizing the function of establishing the preset first interactive relationship between the current user and the first associated user.

In the embodiment of the present disclosure, when displaying the preset panel on the video play page, the list of associated users corresponding to the target video can also be displayed in the second display area on the preset panel, and the function of establishing the preset first interactive relationship between the current user and the first associated user is realized by a trigger operation on the first preset interactive control corresponding to the first associated user, thereby further enriching the video-based interactive function and improving the user experience.

In actual applications, if the current user wants to know more about the target associated user, the video play page of the target video jumps to the profile page of the target associated user through a trigger operation on a preset sub-area in the first display area, and then based on the profile page of the target associated user, multimedia works of interest are selected from the multimedia works published by the target associated user for viewing.

In the embodiment of the present disclosure, the preset sub-area may be any area in the first display area, and the preset sub-area does not overlap with the touchable area in the first display area. For example, the preset sub-area may be any area in the first display area that does not overlap with the display area of the preset media content information and various controls. For example, the preset sub-area may be an area corresponding to the signature information of the target associated user, and the like.

The trigger operation on the preset sub-area in the first display area may comprise a click operation, a touch-and-hold operation, etc. on the preset sub-area, which is used to realize the function of jumping from the video play page to the profile page of the target associated user.

As shown in FIG. 3, when a trigger operation on the preset sub-area in the first display area is received, the video play page shown in FIG. 3 jumps to the profile page of the target associated user Xiao A. The current user can select multimedia works of interest from the multimedia works published by the target associated user Xiao A based on the profile page of the target associated user Xiao A, for viewing.

In actual applications, a prompt message 305 of "X works" can also be displayed on the preset sub-area in the first display area to prompt the current user that the number of multimedia works published by the target associated user Xiao A is X. Thus, the current user can intuitively know the number of multimedia works published by the target associated user Xiao A, thereby improving the user experience.

In an optional implementation, a preset second interactive control may also be provided in the first display area. The current user may trigger the establishment of a preset second interactive relationship between the current user and the target associated user by a trigger operation on the preset second interactive control in the first display area, thereby further enriching the video-based interactive function and improving the user experience.

In the embodiment of the present disclosure, the type of the preset second interactive control in the first display area may be the same as that of the preset first interactive control. For example, the preset first interactive control and the preset second interactive control are both following controls, etc. The preset second interactive control may also be other types of interactive controls, such as a favorite control, a like control, etc.

In the embodiment of the present disclosure, the trigger operation on the preset second interactive control in the first display area may comprise a click operation, touch-and-hold operation, etc. on the preset second interactive control, and the embodiment of the present disclosure does not limit this.

In the embodiment of the present disclosure, the preset second interactive relationship between the current user and the target associated user can be determined based on the preset second interactive control. For example, as shown in FIG. 3, assuming that the preset second interactive control in the first display area is a following control, when a trigger operation on the preset second interactive control 306 is received, the target associated user Xiao A is determined as the following object of the current user, thereby realizing the function of establishing the preset second interactive relationship between the current user and the target associated user.

In the embodiment of the present disclosure, a preset second interactive control may also be displayed in the first display area on the preset panel. When a trigger operation on the preset second interactive control in the first display area is received, the function of establishing the preset second interactive relationship between the current user and the target associated user is implemented, thereby further enriching the video-based interactive function and improving the user experience.

Based on the above method embodiment, the present disclosure further provides an apparatus for video-based interaction, which is applied to a client. Referring to FIG. 4, a schematic diagram of the structure of an apparatus for video-based interaction provided in an embodiment of the present disclosure is shown, and the apparatus comprises:
a display module 401, used to display a plurality of user identifiers on a video play page of a target video, wherein the target video has a plurality of associated users, and the user identifiers are used to identify the associated users; and
a first display module 402, used to display, in response to a trigger operation on a target user identifier of the plurality of user identifiers, a preset panel on the video play page, and display preset media content information of a target associated user corresponding to the target user identifier in a first display area on the preset panel.

In an optional implementation, the preset media content information comprises covers of a preset number of multimedia works published by the target associated user, and the apparatus further comprises:
a playing module, used to play, in response to a trigger operation on a cover of a target multimedia work in the first display area, the target multimedia work based on a target multimedia information stream, wherein the target multimedia information stream comprises multimedia works published by the target associated user.

In an optional implementation, the apparatus further comprises:
a second display module, used to display a list of associated users corresponding to the target video in a second display area on the preset panel, wherein the list of associated users comprises other associated users among the associated users corresponding to the target video except the target associated user.

In an optional implementation, the associated users in the list of associated users are respectively provided with preset first interactive controls, and the apparatus further comprises:
a first establishing module, used to establish, in response to a trigger operation on a preset first interactive control corresponding to a first associated user in the list of associated users, a preset first interactive relationship between a current user and the first associated user.

In an optional implementation, the apparatus further comprises:
a jump module, used to jump from the video play page to the profile page of the target associated user in response to a trigger operation on a preset sub-area in the first display area.

In an optional implementation, a preset second interactive control is provided in the first display area, and the apparatus further comprises:
a second establishing module, used to establish a preset second interactive relationship between the current user and the target associated user in response to a trigger operation on the preset second interactive control in the first display area.

In an optional implementation, the user identifier comprises a user name and/or a user avatar icon.

The disclosed embodiment provides the apparatus for video-based interaction, wherein a plurality of user identifiers are displayed on a video play page of the target video. Wherein the target video has a plurality of associated users, and the user identifiers are used to identify the associated users. In response to a trigger operation on a target user identifier of the plurality of user identifiers, the preset panel is displayed on the video play page, and the preset media content information of the target associated user corresponding to the target user identifier is displayed in the first display area on the preset panel. It can be seen that the disclosed embodiment can display preset media content information of the associated users of the target video on the video play page of the target video, so that the viewing user can quickly understand the associated users of the target video, thereby enriching the video-based interactive function and improving the user experience.

In addition to the above-mentioned method and apparatus, the embodiments of the present disclosure further provide a non-transitory computer-readable storage medium, which stores instructions, wherein the instructions, when executed on a terminal device, cause the terminal device to implement the method for video-based interaction described in the embodiments of the present disclosure.

The embodiments of the present disclosure further provide a computer program product comprising computer programs/instructions, wherein the computer program/instructions, when executed by a processor, implement the method for video-based interaction described in the embodiments of the present disclosure.

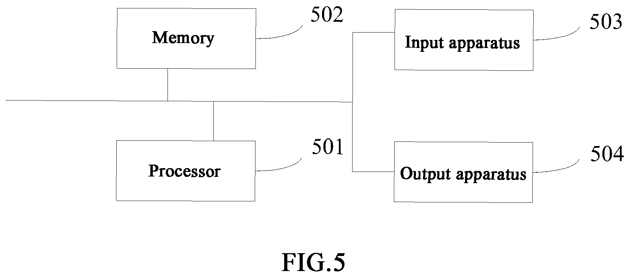

In addition, the embodiment of the present disclosure further provides a device for video-based interaction, as shown in FIGS, which may comprise:
a processor 501, memory 502, input apparatus 503 and output apparatus 504. The number of processors 501 in the device for video-based interaction can be one or more, and one processor is taken as an example in FIG. 5. In some embodiments of the present disclosure, the processor 501, memory 502, input apparatus 503 and output apparatus 504 may be connected via a bus or other means, wherein FIG. 5 takes the connection via a bus as an example.

The memory 502 can be used to store software programs and modules. The processor 501 executes various functional applications and data processing of the device for video-based interaction by running the software programs and modules stored in the memory 502. The memory 502 can mainly comprise a program storage area and a data storage area, wherein the program storage area can store an operating system, at least one application required for a function, etc. In addition, the memory 502 can comprise a high-speed random access memory, and can also comprise a non-volatile memory, such as at least one disk storage device, a flash memory device, or other volatile solid-state storage devices. The input apparatus 503 can be used to receive input numerical or character information, and generate signal input related to user settings and function control of the device for video-based interaction.

Specifically in this embodiment, the processor 501 will load the executable files corresponding to the processes of one or more applications into the memory 502 according to the following instructions, and the processor 501 will run the applications stored in the memory 502, thereby realizing the various functions of the above-mentioned the device for video-based interaction.

It should be noted that, in the specification, relational terms such as "first" and "second" are only used to distinguish one entity or operation from another entity or operation, and do not necessarily require or imply any such actual relationship or order between these entities or operations. Moreover, the terms "comprise", "include" or any other variants thereof are intended to cover non-exclusive inclusion, so that a process, method, article or device including a series of elements comprises not only those elements, but also other elements not explicitly listed, or also comprises elements inherent to such process, method, article or device. In the absence of further restrictions, the elements defined by the sentence "comprise a ... " do not exclude the existence of other identical elements in the process, method, article or device including the elements.

The above description is only a specific embodiment of the present disclosure, so that those skilled in the art can understand or implement the present disclosure. Various modifications to these embodiments will be apparent to those skilled in the art, and the general principles defined herein may be implemented in other embodiments without departing from the spirit or scope of the present disclosure. Therefore, the present disclosure will not be limited to the embodiments described herein, but will conform to the widest scope consistent with the principles and novel features disclosed herein.

## Claims

1. A method for video-based interaction, comprising:
displaying a plurality of user identifiers on a video play page of a target video, wherein the target video has a plurality of associated users, and the user identifiers are used to identify the associated users; and
in response to a trigger operation on a target user identifier of the plurality of user identifiers, displaying a preset panel on the video play page, and displaying preset media content information of a target associated user corresponding to the target user identifier in a first display area on the preset panel.

2. The method according to claim 1, wherein the preset media content information comprises covers of a preset number of multimedia works published by the target associated user, and the method further comprises:
in response to a trigger operation on a cover of a target multimedia work in the first display area, playing the target multimedia work based on a target multimedia information stream, wherein the target multimedia information stream comprises multimedia works published by the target associated user.

3. The method according to claim 1, further comprising:
displaying a list of associated users corresponding to the target video in a second display area on the preset panel, wherein the list of associated users comprises other associated users among the associated users corresponding to the target video except the target associated user.

4. The method according to claim 3, wherein the associated users in the list of associated users are respectively provided with preset first interactive controls, and the method further comprises:
in response to a trigger operation on a preset first interactive control corresponding to a first associated user in the list of associated users, establishing a preset first interactive relationship between a current user and the first associated user.

5. The method according to claim 1, further comprising:
in response to a trigger operation on a preset sub-area in the first display area, jumping from the video play page to a profile page of the target associated user.

6. The method according to claim 1, wherein a preset second interactive control is provided in the first display area, and the method further comprises:
in response to a trigger operation on the preset second interactive control in the first display area, establishing a preset second interactive relationship between a current user and the target associated user.

7. The method according to claim 1, wherein the user identifier comprises a user name and/or a user avatar icon.

8. An apparatus for video-based interaction, comprising:
a display module, used to display a plurality of user identifiers on a video play page of a target video, wherein the target video has a plurality of associated users, and the user identifiers are used to identify the associated users; and
a first display module, used to display, in response to a trigger operation on a target user identifier of the plurality of user identifiers, a preset panel on the video play page, and preset media content information of a target associated user corresponding to the target user identifier in a first display area on the preset panel.

9. A computer-readable storage medium storing instructions, wherein the instructions, when executed on a terminal device, cause the terminal device to implement the method according to any of claims 1 to 7.

10. A device for video-based interaction comprising a memory, a processor, and a computer program stored in the memory and executable on the processor, wherein the processor, when executing the computer program, implements the method according to any of claims 1 to 7.
